# EUROPÄISCHE PATENTSCHRIFT

(11) **EP 3 298 348 B1**
(45) Veröffentlichungstag und Bekanntmachung des Hinweises auf die Patenterteilung: **08.09.2021**
(21) Anmeldenummer: 16724032.4
(22) Anmeldetag: 19.05.2016
(51) Int. Cl.: G01B 11/30, G01B 11/25, G01B 11/12, G01N 21/954

(54) **VORRICHTUNG UND VERFAHREN ZUR OPTISCHEN ERFASSUNG VON INNENWANDUNGEN**
APPARATUS AND METHOD FOR THE OPTICAL DETECTION OF INNER WALLS
DISPOSITIF ET PROCÉDÉ DE DÉTECTION OPTIQUE DE PAROIS INTÉRIEURES

(30) Priorität: 22.05.2015 DE 102015209455
(43) Veröffentlichungstag der Anmeldung: 28.03.2018
(73) Patentinhaber: SAC Sirius Advanced Cybernetics GmbH, 76227 Karlsruhe (DE)
(72) Erfinder: WAGNER, Christoph, 75203 Königsbach-Stein (DE)
(74) Vertreter: Kordel, Mattias
(86) Internationale Anmeldenummer: PCT/EP2016/061341
(87) Internationale Veröffentlichungsnummer: WO 2016/188871

(56) Entgegenhaltungen:
- EP-A1- 1 030 173
- WO-A1-02/090952
- DE-A1-102013 108 457
- US-A- 5 402 165
- US-A1- 2013 027 515
- US-B1- 6 697 102
- US-B1- 8 841 603

## Beschreibung

Die Erfindung betrifft eine Vorrichtung und ein Verfahren zur optischen Erfassung von Innenwandungen, insbesondere zur optischen Innenprüfung und/oder Formerfassung von Hohlräumen, insbesondere von Bohrungen. Insbesondere soll damit die Wandung von zylindrischen Bohrungen und insbesondere die Wandung von Zylinderbohrungen in Verbrennungsmotoren geprüft und/oder in ihrer Form erfasst werden können. Insbesondere soll damit die 100% Kontrolle von Bohrungen schritthaltend zum Produktionstakt ermöglicht werden.

Bestehende Verfahren sind zwar in der Lage, die Wandung von Bohrungen vollflächig zu erfassen, jedoch basieren diese Verfahren auf einem Kamerabild, welches nicht in der Lage ist, Erhebungen und Vertiefungen der Zylinderwand gegenüber der Sollgeometrie von möglichen Verfärbungen und Helligkeitsunterschieden des Materials eindeutig zu unterscheiden. Andere bestehende Verfahren wiederum ermöglichen eine präzise geometrische Vermessung von kleinen Ausschnitten der Zylindergeometrie, sind aber für eine vollflächige 100% Prüfung im Produktionstakt nicht geeignet.

US8841603 B1 offenbart eine Vorrichtung und Verfahren zur optischen Erfassung von Innenwandungen mit einer Kamera, einer optischen Abbildungsanordnung, und einer Beleuchtungsanordnung, wobei die Vorrichtung eingerichtet ist, um eine Mehrzahl axial zueinander versetzter Bereiche einer Innenwandung in Rundumsicht mit der Kamera aufzunehmen.

US 5402165 A offenbart ein Beleuchtungssystem für eine Sonde zur Inspektion eines Durchgangs mit unterschiedlichen Durchmessern. Das Beleuchtungssystem weist eine Lichtanordnung aus mehreren hintereinander angeordneten Lichtquellen auf. Die Leuchtenbaugruppe ist unter dem Sensor montiert, um den Teil des Durchgangs, der im Sichtfeld des Sensors liegt, selektiv zu beleuchten.

Der Erfindung liegt daher die Aufgabe zugrunde, eine Vorrichtung und ein Verfahren zu schaffen, welche die genannten Nachteile nicht aufweisen, und die es insbesondere ermöglichen, Erhebungen und Vertiefungen der Bohrungswand zu erfassen.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem eine Vorrichtung zur optischen Erfassung von Innenwandungen geschaffen wird, welche wenigstens eine Kamera, eine optische Abbildungsanordnung, und eine Beleuchtungsanordnung aufweist, wobei die Vorrichtung eingerichtet ist, um eine Mehrzahl axial zueinander versetzter Bereich einer Innenwandung in Rundumsicht mit der Kamera aufzunehmen. Die Vorrichtung zeichnet sich dadurch aus, dass die Beleuchtungsanordnung wenigstens zwei verschiedene Funktionszustände aufweist, wobei einem ersten Funktionszustand eine erste von der Beleuchtungsanordnung emittierte Helligkeitsverteilung zugeordnet ist, die sich von einer zweiten Helligkeitsverteilung unterscheidet, welche einem zweiten Funktionszustand der Beleuchtungsanordnung zugeordnet ist. Die Beleuchtungsanordnung ist eingerichtet, um in dem ersten Funktionszustand eine erste Helligkeitsverteilung zu erzeugen, wobei sie eingerichtet ist, um in dem zweiten Funktionszustand eine zweite, von der ersten Helligkeitsverteilung verschiedene Helligkeitsverteilung zu erzeugen. Mittels der unter verschiedenen Helligkeitsverteilungen aufgenommenen Bilder ist es möglich, Erhebungen und Vertiefungen der untersuchten Innenwandung zu erfassen und diese insbesondere eindeutig von Verfärbungen und Helligkeitsunterschieden des Materials der Innenwandung zu unterscheiden. Eine vollflächige 100 %-Prüfung, insbesondere in einem Produktionstakt, ist möglich, insbesondere weil die Innenwandung durch die Beleuchtungsanordnung aus verschiedenen Raumrichtungen beleuchtbar ist, und weil sie andererseits rundum und vorzugsweise in ihrer gesamten Tiefe beobachtet werden kann.

Dass die Vorrichtung eingerichtet ist, um eine Mehrzahl axial zueinander versetzte Bereiche der Innenwandung aufzunehmen, bedeutet insbesondere, dass sie eingerichtet ist, um eine Mehrzahl entlang einer optischen Achse der Vorrichtung, insbesondere der Kamera und/oder der Abbildungsanordnung, zueinander versetzte Bereiche aufzunehmen. Eine Axialrichtung ist also insbesondere definiert durch eine optische Achse der Vorrichtung. Alternativ oder zusätzlich ist die Axialrichtung vorzugsweise definiert durch eine Längsachse einer betrachteten Bohrung, deren Innenwandung mit der Kamera aufgenommen wird. Besonders bevorzugt fallen die optische Achse der Vorrichtung und die Längsachse der Bohrung zusammen.

Dass die Vorrichtung eingerichtet ist, um Bereiche der Innenwandung in Rundumsicht aufzunehmen, bedeutet insbesondere, dass die Vorrichtung eingerichtet ist, um in jedem aufgenommenen Einzelbild eine - in Umfangsrichtung gesehen - 360° umfassende Ansicht der Innenwandung aufzunehmen. Es wird also insbesondere ein axialer Ausschnitt der Innenwandung entlang einer geschlossenen Umfangslinie aufgenommen. Die Umfangsrichtung umgreift dabei die Axialrichtung konzentrisch. Im Übrigen wird unter einer radialen Richtung im Folgenden eine Richtung verstanden, welche senkrecht auf der Axialrichtung steht.

Die Vorrichtung ist bevorzugt zumindest teilweise - vorzugsweise vollständig - relativ zu der Innenwandung verlagerbar. Dabei ist es möglich, dass zumindest Teile der Vorrichtung relativ zu der raumfest gehaltenen Innenwandung verlagert werden. Es ist auch möglich, dass die Innenwandung relativ zu der raumfest angeordneten Vorrichtung, oder zumindest relativ zu raumfest angeordneten Teilen der Vorrichtung verlagerbar ist. Es ist aber auch möglich, dass sowohl zumindest Teile der Vorrichtung, gegebenenfalls auch die gesamte Vorrichtung, als auch die Innenwandung verlagerbar sind. Insbesondere ist die Vorrichtung bevorzugt eingerichtet, um zumindest teilweise - vorzugsweise vollständig - innerhalb einer Bohrung verlagert zu werden. Dabei kann die Innenwandung der Bohrung mittels der Vorrichtung erfasst werden.

Besonders bevorzugt ist die Vorrichtung eingerichtet, um entlang der Axialrichtung verlagert zu werden. Dabei kann die Vorrichtung schrittweise oder kontinuierlich entlang der Axialrichtung verlagert werden. Es ist möglich, dass nur einzelne Komponenten der Vorrichtung in Axialrichtung verlagert werden, insbesondere die optische Abbildungsanordnung und/oder die Beleuchtungsanordnung, wobei andere Teile der Vorrichtung stillstehen können, beispielsweise die wenigstens eine Kamera, die Beleuchtungsanordnung und/oder die optische Abbildungsanordnung.

Unter dem Begriff "Helligkeitsverteilung" wird insbesondere eine Leuchtdichte - bevorzugt für sichtbares Licht - oder eine Strahldichte - bevorzugt für nicht-sichtbare Strahlung, insbesondere Infrarot- oder Ultraviolett-Strahlung - verstanden.

Bevorzugt weist die Beleuchtungsanordnung eine Mehrzahl von Funktionszuständen auf, insbesondere mehr als zwei Funktionszustände, wobei jedem Funktionszustand eine Helligkeitsverteilung zugeordnet ist, die sich von den Helligkeitsverteilungen der anderen Funktionszustände unterscheidet. Besonders bevorzugt weist die Beleuchtungsanordnung vier Funktionszustände mit vier verschiedenen Helligkeitsverteilungen auf.

Es wird insbesondere ein Ausführungsbeispiel der Vorrichtung bevorzugt, das sich dadurch auszeichnet, dass die Beleuchtungsanordnung wenigstens drei, vorzugsweise wenigstens vier verschiedene Funktionszustände aufweist, wobei jedem Funktionszustand eine von den Helligkeitsverteilungen der anderen Funktionszustände verschiedene Helligkeitsverteilung zugeordnet ist.

Bei einem bevorzugten Ausführungsbeispiel weist die Vorrichtung eine Steuereinrichtung auf, die eingerichtet ist zur Ansteuerung der Beleuchtungsanordnung, insbesondere, um einen Funktionszustand der Beleuchtungsanordnung auszuwählen und zu aktivieren. Bevorzugt ist die Steuereinrichtung zusätzlich eingerichtet zur Steuerung der wenigstens einen Kamera und/oder zur Steuerung der Relativverlagerung der Vorrichtung zu der betrachteten Innenwandung. Dabei werden die Aktivierung der verschiedenen Funktionszustände, das Auslösen von Bildaufnahmen durch die Kamera, und/oder die Verlagerung der Vorrichtung relativ zu der Innenwandung bevorzugt zeitlich aufeinander abgestimmt, insbesondere synchronisiert. Es ist auch möglich, dass die Steuereinrichtung eingerichtet ist zur Steuerung oder Regelung der Verlagerung der Vorrichtung relativ zu der Innenwandung, wobei ein Weggeber vorgesehen ist, der die Verlagerung überwacht und Impulse insbesondere bei vorgegebenen Wegabschnitten oder momentanen Orten im Zuge der Verlagerung ausgibt, wobei die Kamera und die Beleuchtungsanordnung durch die Impulse des Weggebers - insbesondere abhängig von dem Verlagerungsweg oder momentanen Ort der Vorrichtung - angesteuert werden.

Es wird ein Ausführungsbeispiel der Vorrichtung bevorzugt, das sich dadurch auszeichnet, dass die Kamera, die optische Abbildungsanordnung, und die Beleuchtungsanordnung integral miteinander verlagerbar ausgebildet sind. Die genannten Elemente sind bevorzugt zu einer Baugruppe zusammengefasst, und können gemeinsam relativ zu der Innenwandung, insbesondere innerhalb einer Bohrung, verlagert werden. Auf diese Weise ergibt sich eine Vorrichtung, die besonders einfach handhabbar ist, wobei die von der Vorrichtung aufgenommenen Bilder besonders einfach ausgewertet werden können. Zugleich ist es möglich, mit der Vorrichtung eine besonders schnelle Prüfung einer Innenwandung durchzuführen, sodass dies innerhalb eines Produktionstakts geschehen kann. Vorzugsweise weist die Vorrichtung ein zylindrisches Rohr auf, an dem die Kamera, die optische Abbildungsanordnung und die Beleuchtungsanordnung befestigt sind. Insbesondere ist es möglich, dass die Kamera, die Beleuchtungsanordnung und die Abbildungsanordnung in dem zylindrischen Rohr befestigt sind. Das zylindrische Rohr ist bevorzugt zumindest bereichsweise transparent, insbesondere durchsichtig, vorzugsweise in einem Bereich, in welchem ein Strahlengang der Beleuchtungsanordnung und/oder der Abbildungsanordnung verläuft.

Es wird ein Ausführungsbeispiel der Vorrichtung bevorzugt, das sich dadurch auszeichnet, dass die wenigstens eine Kamera, die optische Abbildungsanordnung und die Beleuchtungsanordnung integral miteinander, insbesondere miteinander zusammenhängend, ausgebildet sind. Auf diese Weise sind die genannten Elemente gemeinsam miteinander verlagerbar, und die Vorrichtung ist insgesamt kompakt aufgebaut.

Es wird ein Ausführungsbeispiel der Vorrichtung bevorzugt, das sich dadurch auszeichnet, dass die optische Abbildungsanordnung eine Kameraoptik aufweist. Zusätzlich oder alternativ weist die optische Abbildungsanordnung bevorzugt eine Spiegelanordnung auf. Die Abbildungsanordnung ist vorzugsweise eingerichtet, um einen betrachteten Bereich der Innenwandung auf eine Bildebene der Kamera abzubilden. Zusätzlich oder alternativ ist die Abbildungsanordnung bevorzugt eingerichtet, um Licht von der Beleuchtungsanordnung auf den betrachteten Bereich der Innenwandung zu lenken.

Es wird ein Ausführungsbeispiel der Vorrichtung bevorzugt, das sich dadurch auszeichnet, dass die Beleuchtungsanordnung eingerichtet und/oder angeordnet ist, um eine Innenwandung direkt zu beleuchten. In diesem Fall fällt von der Beleuchtungsanordnung emittierte Strahlung direkt - insbesondere ohne die Abbildungsanordnung zu passieren - auf die Innenwandung.

Alternativ oder zusätzlich ist die Beleuchtungsanordnung bevorzugt eingerichtet und/oder angeordnet, um eine Innenwandung indirekt zu beleuchten, insbesondere über die Abbildungsanordnung. Dabei dient dann die Abbildungsanordnung zur Lichtleitung von der Beleuchtungsanordnung zu der Innenwandung.

Gemäß der Erfindung ist die Beleuchtungsanordnung eingerichtet, um in axialer Richtung, in radialer Richtung, und/oder in Umfangsrichtung gesehen variierende Helligkeitsverteilungen zu emittieren. Dabei ist insbesondere die Helligkeitsverteilung am Ort der Entstehung der Helligkeitsverteilung, insbesondere am Ort der Beleuchtungsanordnung, insbesondere am Ort der Entstehung der Strahlung, angesprochen. Bevorzugt weist jede Helligkeitsverteilung eines Funktionszustands eine Abhängigkeit von wenigstens einer Koordinate, insbesondere entlang der Axialrichtung und/oder entlang der Umfangsrichtung, auf, wobei die Helligkeitsverteilung entlang der wenigstens einen Koordinate nicht konstant ist. Alternativ oder zusätzlich unterscheiden sich die verschiedenen Funktionszuständen zugeordneten Helligkeitsverteilungen in ihrer Abhängigkeit von der wenigstens einen Koordinate. Auf diese Weise ist es möglich, die Innenwandung mittels der Beleuchtungsanordnung aus mehreren Raumrichtungen zu beleuchten und dabei Helligkeitsschattierungen zu erhalten, welche Informationen über die topografische Beschaffenheit der Innenwandung umfassen.

Es wird ein Ausführungsbeispiel der Vorrichtung bevorzugt, das sich dadurch auszeichnet, dass die Beleuchtungsanordnung wenigstens zwei vorzugsweise unabhängig voneinander schaltbare Lichtquellen aufweist. Durch Schalten der Lichtquellen ist es möglich, verschiedene Helligkeitsverteilungen zu realisieren. Jede Lichtquelle umfasst bevorzugt mindestens ein Beleuchtungselement, vorzugsweise eine Mehrzahl von Beleuchtungselementen. Insbesondere weisen die Lichtquellen bevorzugt eine Gruppe von Beleuchtungselementen auf, die gemeinsam geschaltet werden können, wobei die verschiedenen Lichtquellen zugeordneten Gruppen von Beleuchtungselementen unabhängig voneinander schaltbar sind. Als Beleuchtungselemente können beispielsweise LED verwendet werden.

Alternativ oder zusätzlich weist die Beleuchtungsanordnung bevorzugt wenigstens eine flächige Beleuchtungseinrichtung auf, die eingerichtet ist, um in einem ersten Funktionszustand ein erstes, strukturiertes Beleuchtungsmuster darzustellen, wobei die flächige Beleuchtungseinrichtung weiterhin eingerichtet ist, um in einem zweiten Funktionszustand ein zweites, strukturiertes Beleuchtungsmuster darzustellen, welches von dem ersten strukturierten Beleuchtungsmuster verschieden ist. Eine solche flächige Beleuchtungseinrichtung kann beispielsweise nach Art eines Arrays von einzelnen Lichtpunkten, insbesondere nach Art eines Displays, ausgebildet sein. Auch mittels verschiedener, strukturierter Beleuchtungsmuster ist es möglich, die Innenwandung aus mehreren Raumrichtungen zu beleuchten. Eine flächige Beleuchtungseinrichtung kann auch wenigstens eine organische Leuchtdiode (OLED) aufweisen oder als OLED ausgebildet sein. Mit einer flächigen Beleuchtungseinrichtung ist bevorzugt eine Aufnahme insbesondere von spiegelnden Innenwandungen in Hellfeldbeleuchtung möglich.

Es wird auch ein Ausführungsbeispiel der Vorrichtung bevorzugt, das sich dadurch auszeichnet, dass die Beleuchtungsanordnung wenigstens zwei flächige Beleuchtungseinrichtungen aufweist, die axial voneinander beabstandet angeordnet sind, wobei die Abbildungsanordnung so eingerichtet und relativ zu den Beleuchtungseinrichtungen positioniert ist, dass ein Bereich einer Innenwandung axial zwischen den flächigen Beleuchtungseinrichtungen in der Kamera abbildbar ist. Insbesondere ist bevorzugt eine Spiegelanordnung der Abbildungsanordnung axial zwischen den beiden flächigen Beleuchtungseinrichtungen angeordnet. Auf diese Weise ist insbesondere eine besonders komplexe und großflächig strukturierte Beleuchtung der Innenwandung und bevorzugt eine Aufnahme von spiegelnden Innenwandungen in Hellfeldbeleuchtung möglich.

Es wird auch ein Ausführungsbeispiel der Vorrichtung bevorzugt, das sich dadurch auszeichnet, dass die Beleuchtungsanordnung wenigstens zwei axial voneinander beabstandete, ringförmige Lichtquellen aufweist, die unabhängig voneinander schaltbar sind. Insbesondere können die ringförmigen Lichtquellen abwechselnd aktiviert und deaktiviert werden, mithin im Wechsel geschaltet werden, wodurch verschiedene Beleuchtungsverteilungen auf der Innenwandung möglich sind. Vorzugsweise sind die ringförmigen Lichtquellen als Diodenringe, das heißt Ringe von LED, ausgebildet, die - in Umfangsrichtung gesehen - zueinander benachbarte LED aufweisen. Eine Beleuchtungsrichtung der ringförmigen Lichtquellen erstreckt sich dabei bevorzugt im Wesentlichen in radialer Richtung. Die ringförmigen Lichtquellen erstrecken sich bei einem bevorzugten Ausführungsbeispiel zylindermantelförmig um die Axialrichtung. Es ist aber auch möglich, dass zumindest eine der ringförmigen Lichtquellen einen Winkel zur Axialrichtung aufweist, wobei die ringförmige Lichtquelle insbesondere kegelstumpfmantelförmig zur Axialrichtung angeordnet ist. Die Hauptbeleuchtungsrichtung erstreckt sich dann schräg zur Axialrichtung.

Es ist möglich, dass die Vorrichtung wenigstens ein Streuelement, vorzugsweise einen Streukörper oder eine Streuscheibe, aufweist, welches - vorzugsweise mit einem geeigneten Abstand - vor den Lichtquellen angeordnet ist, um eine möglichst glatte Helligkeitsverteilung insbesondere ohne ausgeprägte lokale Maxima am Ort der Lichtquellen, zu erreichen.

Ein bevorzugtes Ausführungsbeispiel der Vorrichtung weist eine flächige Beleuchtungseinrichtung auf, die wenigstens eine ringförmige Lichtquelle und einen Streukörper aufweist. Der Streukörper ist vorzugsweise zylinderförmig ausgebildet und mit seiner Symmetrieachse in Axialrichtung der Vorrichtung ausgerichtet, wobei die wenigstens eine ringförmige Lichtquelle an einer Stirnseite des zylinderförmigen Streukörpers derart angeordnet ist, dass sie den Streukörper in axialer Richtung durchstrahlt. Besonders bevorzugt ist an einer ersten Stirnseite des zylinderförmigen Streukörpers eine erste ringförmige Lichtquelle angeordnet, wobei an einer zweiten, in Axialrichtung gesehen der ersten Stirnseite gegenüberliegenden Stirnseite des zylinderförmigen Streukörpers eine zweite ringförmige Lichtquelle angeordnet ist. Dabei sind sowohl die erste ringförmige Lichtquelle als auch die zweite ringförmige Lichtquelle so angeordnet, dass sie den Streukörper jeweils in axialer Richtung durchstrahlen, sie weisen also insbesondere entgegengesetzte und in das Innere des Streukörpers gerichtete Abstrahlrichtungen auf.

Die erste ringförmige Lichtquelle und die zweite ringförmige Lichtquelle sind vorzugsweise unabhängig voneinander schaltbar. Insbesondere sind die erste ringförmige Lichtquelle und die zweite ringförmige Lichtquelle bevorzugt bezüglich ihrer Helligkeiten unabhängig voneinander steuerbar. So können insbesondere durch verschiedene Ansteuerung der ersten ringförmigen Lichtquelle und der zweiten ringförmigen Lichtquelle verschiedene axial strukturierte Beleuchtungsverteilungen - insbesondere auf dem Streukörper - erzeugt werden. Beispielsweise kann bei einer Ansteuerung der ersten ringförmigen Lichtquelle mit einer maximalen Helligkeit und zugleich der zweiten ringförmigen Lichtquelle mit einer minimalen Helligkeit eine axial strukturierte Beleuchtungsverteilung erzeugt werden, insbesondere auch eine stetig zu- oder abnehmende Beleuchtungsverteilung, insbesondere eine linear oder näherungsweise linear zu- oder abnehmende Beleuchtungsverteilung. Andererseits kann bei einer Ansteuerung der ersten ringförmigen Lichtquelle mit minimaler Helligkeit und der zweiten ringförmigen Lichtquelle mit maximaler Helligkeit eine andere, insbesondere zu der zuvor beschriebenen Beleuchtungsverteilung gegenläufige oder invertierte Beleuchtungsverteilung erzeugt werden.

Bevorzugt weist die wenigstens eine ringförmige Lichtquelle eine Mehrzahl von Beleuchtungselementen auf, die beispielsweise als LED ausgebildet sein können. Es ist insbesondere möglich, dass die wenigstens eine ringförmige Lichtquelle als Diodenring ausgebildet ist. Die einzelnen Beleuchtungselemente sind vorzugsweise gemeinsam oder separat ansteuerbar. Besonders bevorzugt sind sie in ihrer Helligkeit - vorzugsweise unabhängig voneinander - so steuerbar, dass vorzugsweise wenigstens eine vorbestimmte Beleuchtungsverteilung der flächigen Beleuchtungseinrichtung - insbesondere auf dem Streukörper - erzeugt werden kann. Vorzugsweise sind durch Steuerung der Helligkeiten der einzelnen Beleuchtungselemente eine Mehrzahl verschiedener Beleuchtungsverteilungen der flächigen Beleuchtungseinrichtung - insbesondere auf dem Streukörper - erzeugbar. Es können so auch in Umfangsrichtung strukturierte Beleuchtungsverteilungen realisiert werden, indem die Beleuchtungselemente der wenigstens einen ringförmigen Lichtquelle mit entlang der Umfangsrichtung gesehen verschiedenen Helligkeiten betrieben werden. Beispielsweise können dabei Beleuchtungsverteilungen mit cosinus- oder sinus-förmigem Verlauf oder einer Annäherung an einen solchen Verlauf erzeugt werden.

Es können auch Beleuchtungsverteilungen erzeugt werden, die in axialer Richtung und/oder in Umfangsrichtung strukturiert sind. Insbesondere ist es vorteilhaft, wenn die Helligkeiten der einzelnen Beleuchtungselemente der ersten ringförmigen Lichtquelle und der zweiten ringförmigen Lichtquelle individuell angesteuert werden können.

Es ist bevorzugt auch möglich, eine kleinere oder auch eine größere Anzahl von ringförmigen Lichtquellen zu verwenden.

Es werden also bevorzugt mindestens eine Kamera, mindestens eine Kameraoptik und/oder Spiegelanordnung und mindestens zwei schaltbare Beleuchtungen und/oder mindestens eine flächige Beleuchtung verwendet, welche dazu geeignet ist, mehrere strukturierte Beleuchtungsmuster darzustellen.

Die Innenwandung, insbesondere die Bohrungsinnenfläche, wird aus mehreren Raumrichtungen beleuchtet. Die dabei entstehenden Helligkeitsschattierungen enthalten Information über die topografische Beschaffenheit der Wandoberfläche. Eine besondere Herausforderung liegt darin, eine optische Anordnung zu schaffen, die es einerseits ermöglicht die Bohrungswand aus verschiedenen Raumrichtungen zu beleuchten und andererseits die Bohrungswand rundum und in ihrer gesamten Tiefe zu beobachten. Zur Abbildung eines Bereichs der Innenwandung, insbesondere einer Mantelfläche, rundum wird bevorzugt eine als spezielle Optik ausgebildete Abbildungsanordnung verwendet, insbesondere eine Abbildungsoptik, welche einen konischen, einen sphärischen, einen parabolischen, einen ellipsoiden oder einen anderen rotationssymmetrischen Spiegel umfasst. Der Spiegel kann auch eine Freiformgeometrie aufweisen. Bevorzugt ist der Spiegel konvex ausgebildet. Alternativ kann hierzu auch eine speziell gestaltete Linsenoptik, insbesondere eine Optik mit großem Öffnungswinkel, beipielsweise ein Fischaugenobjektiv, verwendet werden. Ebenso sind Anordnungen aus mehreren ebenen Spiegeln möglich, welche die Bohrungsinnenwand abschnittsweise erfassen. Vorzugsweise wird diese Optik, insbesondere eine rotationssymmetrische Optik mit ihrer optischen Achse bzw. Symmetrieachse so ausgerichtet, dass diese mit der Achse der zylindrischen Bohrung identisch ist oder näherungsweise identisch ist. Eine solche Optik bildet zylindrische ringförmige Bereiche der Bohrungsinnenwand vorzugsweise auf ebene ringförmige Bereiche ab, die mit einer elektronischen Kamera und vorzugsweise einem Objektiv beobachtet werden können. Zur Beobachtung der Bohrungsinnenwand über einen weiten Bereich ihrer Tiefe oder ihre gesamte Tiefe wird die Vorrichtung inklusive der Abbildungsoptik in axialer Richtung durch die Bohrung bewegt. Diese Bewegung kann kontinuierlich oder auch schrittweise erfolgen.

Zur Beleuchtung der Innenwandung wird vorzugsweise ebenfalls dieselbe Abbildungsanordnung, insbesondere Abbildungsoptik, oder Teile hiervon genutzt, welche insbesondere einen konischen, einen sphärischen oder einen anderen rotationssymmetrischen Spiegel umfasst. Die Beleuchtungsanordnung besteht vorzugsweise aus mehreren Lichtquellen, welche die Innenfläche der Bohrung entweder direkt, vorzugsweise aber indirekt über die bereits genannte Optik zur Beobachtung der Innenwandung, insbesondere der Bohrungsinnenfläche, beleuchtet. Insbesondere findet die Beleuchtung indirekt über einen konischen, einen sphärischen oder einen anderen rotationssymmetrischen Spiegel statt. Die Anzahl der Lichtquellen ist vorzugsweise größer als eins, insbesondere beträgt ihre Anzahl 2, 3 oder 4. Alternativ kann auch eine höhere Anzahl von Lichtquellen verwendet werden. Vorzugsweise sind die Lichtquellen unabhängig schaltbar. Vorzugsweise sind diese Lichtquellen, insbesondere Beleuchtungselemente oder Gruppen von Beleuchtungselementen, so angeordnet, dass die Bohrungsinnenfläche von den Lichtquellen direkt oder indirekt aus unterschiedlichen räumlichen Richtungen beleuchtet werden kann. Insbesondere können die Lichtquellen in Form eines Rings oder anderen geometrischen Formen angeordnet sein. Besonders bevorzugt wird eine Anordnung, bei der die Lichtquellen in Form eines Rings angeordnet sind, dessen Symmetrieachse identisch oder nahezu identisch ist mit der Symmetrieachse des rotationssymmetrischen Spiegels. Der Ring kann dabei in einem geeigneten axialen Abstand vom Spiegel angeordnet sein, insbesondere auch in der Nähe der Kamera bzw. der Kameraoptik.

Die Aufgabe wird auch gelöst, indem ein Verfahren zur optischen Erfassung von Innenwandungen geschaffen wird, bei welchem eine Vorrichtung nach einem der zuvor beschriebenen Ausführungsbeispiele verwendet wird. Dabei wird zeitlich nacheinander eine Bildfolge von axial zueinander versetzten Bereichen der Innenwandung in Rundumsicht mit der Kamera aufgenommen, wobei zugleich die Beleuchtungsanordnung angesteuert wird, um während der Aufnahme der Bildfolge wechselnde Helligkeitsverteilungen zu erzeugen. Dabei verwirklichen sich in Zusammenhang mit dem Verfahren die Vorteile, die bereits in Zusammenhang mit der Vorrichtung erläutert wurden.

Insbesondere wird im Rahmen des Verfahrens eine Mehrzahl von Bildern axial zueinander versetzter Bereiche aufgenommen, wobei - insbesondere von Bild zu Bild - wechselnde Helligkeitsverteilungen durch die Beleuchtungsanordnung erzeugt werden. Vorzugsweise wird ein Zyklus aus einer endlichen Zahl verschiedener Helligkeitsverteilungen verwirklicht, die periodisch nacheinander aktiviert werden, wobei besonders bevorzugt für jede Helligkeitsverteilung ein Bild - oder auch eine Mehrzahl von Bildern - aufgenommen wird. Nach einer letzten Helligkeitsverteilung des Zyklus wird wieder die erste Helligkeitsverteilung des Zyklus aktiviert, wobei der Zyklus bis zur Beendigung des Verfahrens iteriert wird.

Bevorzugt wird die Vorrichtung im Rahmen des Verfahrens zumindest teilweise in axialer Richtung schrittweise oder kontinuierlich verlagert. Besonders bevorzugt wird die Vorrichtung insgesamt, insbesondere die Kamera, die optische Abbildungsanordnung und die Beleuchtungsanordnung integral, in axialer Richtung schrittweise oder kontinuierlich verlagert. Dies ermöglicht eine reproduzierbare Aufnahme verschiedener Bereiche der Innenwandung mit einer besonders einfachen Auswertung und insgesamt einer schnellen Prüfung der vollständigen Innenwandung, insbesondere in einem Produktionstakt.

Gemäß der Erfindung wird ein Wechsel der Helligkeitsverteilungen mit einer Frequenz von mindestens 25 Hz, vorzugsweise von mindestens 50 Hz, vorzugsweise von mindestens 75 Hz, vorzugsweise von mindestens 100 Hz, durchgeführt. Vorzugsweise wird der Wechsel der Helligkeitsverteilungen mit höchstens 50 kHz, vorzugsweise mit höchstens 10 kHz, vorzugsweise mit höchstens 2 kHz, vorzugsweise mit höchstens 500 Hz, vorzugsweise mit höchstens 200 Hz durchgeführt. Die Frequenz beträgt insbesondere bevorzugt von mindestens 25 Hz bis höchstens 50 kHz, vorzugsweise von mindestens 50 Hz bis höchstens 10 kHz, vorzugsweise von mindestens 75 Hz bis höchstens 2 kHz, vorzugsweise von mindestens 100 Hz bis höchstens 500 Hz, vorzugsweise von mindestens 100 Hz bis höchstens 200 Hz. Dabei bezeichnet ein Wechsel der Helligkeitsverteilungen einen Wechsel von einer Helligkeitsverteilung zu einer nächsten Helligkeitsverteilung, insbesondere innerhalb eines Zyklus oder einer zyklischen Abfolge von Helligkeitsverteilungen.

Es wird insbesondere eine Ausführungsform des Verfahrens bevorzugt, die sich dadurch auszeichnet, dass eine zyklische Abfolge einer vorbestimmten Zahl von Helligkeitsverteilungen erzeugt wird, wobei für jede Helligkeitsverteilung eine Abbildung aufgenommen und ein ringförmiger Bereich eines Sensors der Kamera ausgewertet wird, wobei eine radiale Breite des ringförmigen Bereichs - in der Sensorebene -, gemessen als Anzahl von Pixeln des Sensors, gleich der vorbestimmten Zahl der Helligkeitsverteilungen oder gleich einem ganzzahligen Vielfachen hiervon ist. Dabei wird ein axialer Versatz eines mit einer nächsten Helligkeitsverteilung aufgenommenen Bereichs der Innenwandung zu einem vorherigen, mit einer insbesondere unmittelbar vorhergehenden Helligkeitsverteilung aufgenommenen Bereich gleich einer axialen Höhe gewählt, die sich aus der die radiale Breite des ringförmigen Bereichs angebenden Anzahl von Pixeln, die im folgenden kurz auch als "Pixelzahl" bezeichnet wird, dividiert durch die vorbestimmte Zahl der Helligkeitsverteilungen und multipliziert mit einer optischen Pixelhöhe des Sensors auf der Innenwandung ergibt. Bei dieser Vorgehensweise ist zugleich eine sehr schnelle Prüfung der gesamten Innenwandung wie auch eine vereinfachte Auswertung, insbesondere durch geschickte Anordnung der aufgenommenen Bilder in einem Speicher einer Auswertungseinrichtung, möglich.

Der Sensor wird vorzugsweise nach jeder Aufnahme einer Abbildung vollständig ausgelesen, oder es wir wenigstens ein rechteckförmiger, interessierender Bereich des Sensors ausgelesen, der bevorzugt den ringförmigen Bereich aufweist. Es ist auch möglich, dass eine Mehrzahl rechteckförmiger, interessierender Bereiche ausgelesen wird. In einer Recheneinrichtung ausgewertet wird aber bevorzugt nur der ringförmige Bereich.

Der Begriff "optische Pixelhöhe des Sensors auf der Innenwandung" bedeutet insbesondere eine - in Axialrichtung gemessene - Höhe, die sich aus der physikalischen Pixelbreite eines Pixels auf dem Sensor, anhand der auf die Abbildungsanordnung anzuwendenden, physikalischen Abbildungsgesetze projiziert auf die Innenwandung, ergibt.

Im Rahmen dieser Vorgehensweise ergibt sich insbesondere Folgendes: Nach jeder Aufnahme mit einer bestimmten Helligkeitsverteilung wird eine nächste Helligkeitsverteilung aktiviert, und eine nächste Aufnahme wird zu der vorhergehenden Aufnahme axial versetzt derart aufgenommen, dass nach Vollendung eines vollständigen Zyklus der Helligkeitsverteilungen der axiale Versatz zwischen dem ersten Bild des nächsten Zyklus der Helligkeitsverteilungen zu dem ersten Bild des vorangegangenen Zyklus der Helligkeitsverteilung gerade der axialen Höhe der Pixelzahl multipliziert mit der optischen Pixelhöhe auf der Innenwandung entspricht. Durch diese Vorgehensweise steht für jeden Bereich der Innenwandung - bis auf Randbereiche zu Beginn und zum Ende des Verfahrens - Information mit jeder Helligkeitsverteilung zur Verfügung, wobei zugleich nach jeder Aktivierung einer Helligkeitsverteilung und vorzugsweise nach jeder Aufnahme eine axiale Verlagerung der Vorrichtung stattfindet, sodass sehr kurze Messzeiten realisiert werden können. Die Vorrichtung muss also nicht ortsfest verharren, während ein Helligkeitsverteilungs-Zyklus durchlaufen wird.

Beträgt beispielsweise die Pixelzahl pro Helligkeitsverteilung vier, und beträgt die vorbestimmte Zahl der Helligkeitsverteilung ebenfalls vier, beträgt der axiale Versatz zwischen zwei zeitlich unmittelbar benachbarten Aufnahmen gerade eine Pixelhöhe auf der Innenwandung. Werden dagegen beispielsweise vier Helligkeitsverteilungen verwendet, und pro aktivierter Helligkeitsverteilung und pro Aufnahme beträgt die Pixelzahl acht, beträgt der axiale Versatz zwischen zwei aufeinanderfolgenden Aufnahmen mit verschiedenen Helligkeitsverteilungen gerade zwei Pixelhöhen auf der Innenwandung.

Bevorzugt wird eine Ausführungsform des Verfahrens, bei welcher vier Helligkeitsverteilungen verwendet werden, wobei die Pixelzahl sechzehn beträgt, wobei in diesem Fall der axiale Versatz zwischen zwei unmittelbar nacheinander mit verschiedenen Helligkeitsverteilungen aufgenommenen Bereichen der Innenwandung gerade der vierfachen optischen Pixelhöhe des Sensors auf der Innenwandung entspricht.

Vorzugsweise wird die Verlagerung der Vorrichtung entsprechend gesteuert, um die zuvor erläuterte Vorgehensweise zu verwirklichen, wobei dies durch kontinuierliche Verlagerung der Vorrichtung mit entsprechend angepasster Geschwindigkeit, oder aber durch schrittweise Verlagerung der Vorrichtung, insbesondere nach jeder Aufnahme und/oder nach jedem Wechsel der Helligkeitsverteilung, erfolgen kann. Es ist auch eine gesteuerte oder geregelte Verlagerung möglich, wobei die Kamera und die Beleuchtungsanordnung bevorzugt mittels eines Weggebers angesteuert, insbesondere getriggert, werden.

Um das Problem der fehlende Information für Randbereiche zu lösen, wird bevorzugt die Prüfung einer zu untersuchenden Innenwandung axial vor einem Anfang des zu prüfenden Bereichs der Innenwandung begonnen und axial hinter einem Ende des zu prüfenden Bereichs der Innenwandung beendet, sodass die im Rahmen der Auswertung nicht erfassbaren Randbereiche nicht zu den zu prüfenden Bereichen gehören und somit vernachlässigt werden dürfen.

Es wird auch eine Ausführungsform des Verfahrens bevorzugt, die sich dadurch auszeichnet, dass eine zyklische Abfolge einer vorbestimmten Zahl von Helligkeitsverteilungen erzeugt wird, wobei wenigstens fünf Zyklen, vorzugsweise wenigstens 20 Zyklen, vorzugsweise wenigstens 100 Zyklen, vorzugsweise wenigstens 500 Zyklen, durchlaufen werden.

Besonders bevorzugt wird im Rahmen des Verfahrens eine optische Innenprüfung einer Bohrung, insbesondere einer Zylinderbohrung einer Brennkraftmaschine, eine Formerfassung einer Bohrung, insbesondere einer Zylinderbohrung einer Brennkraftmaschine, eine optische Innenprüfung eines Hohlraums, und/oder eine Formerfassung eines Hohlraums, durchgeführt.

Im Rahmen des Verfahrens wird bevorzugt eine optische Innenprüfung einer Bohrung für oder an einem Motorkolben, insbesondere auch einer Nabenbohrung in einem Motorkolben, oder eine optische Innenprüfung einer Bohrung in einem Motorpleuel, einer Bohrung in einem Getriebe, insbesondere einem Automobilgetriebe, insbesondere einem Automatikgetriebe, oder dergleichen geprüft.

Die Vorrichtung ist bevorzugt insbesondere eingerichtet zur optischen Innenprüfung solcher Bohrungen.

Die Beschreibung des Verfahrens einerseits und der Vorrichtung andererseits sind komplementär zueinander zu verstehen. Insbesondere sind Merkmale der Vorrichtung, welche explizit oder implizit in Zusammenhang mit dem Verfahren beschrieben wurden, bevorzugt einzeln oder miteinander kombiniert Merkmale eines bevorzugten Ausführungsbeispiels der Vorrichtung. In analoger Weise sind Verfahrensschritte, die explizit oder implizit in Zusammenhang mit der Vorrichtung beschrieben wurden, bevorzugt einzeln oder miteinander kombiniert Schritte einer bevorzugten Ausführungsform des Verfahrens. Die Vorrichtung ist vorzugsweise gekennzeichnet durch wenigstens ein Merkmal, welches durch wenigstens einen Verfahrensschritt einer erfindungsgemäßen oder bevorzugten Ausführungsform des Verfahrens bedingt ist. Das Verfahren weist vorzugsweise wenigstens einen Verfahrensschritt auf, der durch wenigstens ein Merkmal eines erfindungsgemäßen oder bevorzugten Ausführungsbeispiels der Vorrichtung bedingt ist.

Die Erfindung wird im Folgenden anhand der Zeichnung näher erläutert. Dabei zeigen:
- Figur 1: eine schematische Darstellung eines ersten Ausführungsbeispiels einer Vorrichtung zur optischen Erfassung von Innenwandungen;
- Figur 2: eine schematische Detaildarstellung des ersten Ausführungsbeispiels;
- Figur 3: eine schematische Detaildarstellung eines abgewandelten Ausführungsbeispiels der Vorrichtung;
- Figur 4: eine schematische Darstellung eines dritten Ausführungsbeispiels der Vorrichtung;
- Figur 5: eine schematische Darstellung eines weiteren Funktionszustands des dritten Ausführungsbeispiels;
- Figur 6: eine schematische Darstellung eines vierten Ausführungsbeispiels der Vorrichtung;
- Figur 7: eine weitere schematische Darstellung des vierten Ausführungsbeispiels der Vorrichtung, und
- Figur 8: eine schematische Darstellung eines fünften Ausführungsbeispiels der Vorrichtung.

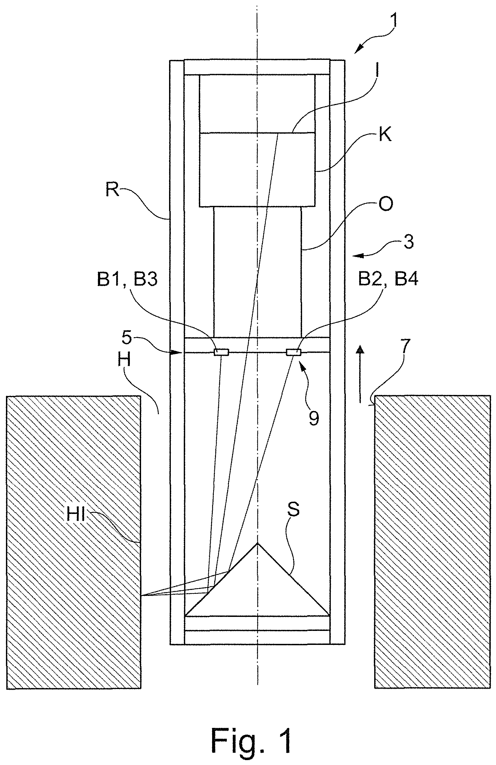

Figur 1 zeigt eine Vorrichtung 1 in Seitenansicht, welche eine Kamera K, eine Abbildungsanordnung 3 mit einem Kameraobjektiv O und einem konischen Spiegel S, und eine Beleuchtungsanordnung 5 mit n=4 Lichtquellen 9, die auch als Beleuchtungen B1, B2, ... bis Bn bezeichnet werden, umfasst. Im gezeigten Beispiel weist der konische Spiegel S einen Öffnungswinkel von 90° auf. Darüber hinaus umfasst die Vorrichtung 1 ein zylindrisches Rohr R, welches die zuvor genannten optischen Elemente aufnimmt und welches zumindest in einem Bereich durchsichtig ist, vorzugsweise in dem Bereich, in dem der Strahlengang der Beleuchtung und/oder der Beobachtung verläuft. Vorzugsweise wird die gesamte Vorrichtung 1, die im Folgenden auch als Anordnung bezeichnet wird, anhand einer hier nicht gezeichneten Einrichtung zunächst in eine Bohrung oder einen Hohlraum H eingetaucht, bis eine gewünschte Position erreicht ist und danach in Pfeilrichtung wieder zurückbewegt. Die Bildaufnahme kann wahlweise beim Eintauchen und/oder beim Herausfahren aus der Bohrung erfolgen. Besonders bevorzugt erfolgt die Bildaufnahme beim Herausfahren aus der Bohrung. Die Bewegung kann schrittweise erfolgen, besonders bevorzugt erfolgt sie aber in kontinuierlicher Bewegung. Im Laufe der schrittweisen oder der kontinuierlichen Bewegung nimmt die Kamera eine Vielzahl von Bildern auf. Der Spiegel S sowie die Kameraoptik O bilden dabei einen Bereich der Innenwandung 7, insbesondere der Bohrungsinnenfläche bzw. der Hohlrauminnenfläche HI, in die Bildebene I der Kamera ab. Die Figur 1 enthält beispielhaft einen solchen Strahlengang. Die Beleuchtung der Bohrungsinnenfläche erfolgt hier durch die Beleuchtungen B1 bis Bn, deren Licht über den Spiegel S umgelenkt wird und auf die Bohrungsinnenfläche trifft. Auch hierzu sind beispielhaft Strahlengänge eingezeichnet. Der zeitliche Ablauf von Beleuchtung und Bildaufnahme ist nun wie folgt.

Zunächst wird die Bohrungsinnenfläche mit einer ersten Beleuchtung, beispielsweise der Beleuchtung B1 beleuchtet und die Kamera nimmt ein Bild auf. Das Bild wird an eine Recheneinheit weitergeleitet, welche hier nicht dargestellt ist. Die Bildaufnahme erfolgt vorzugsweise in der Bewegung. Nachdem die Anordnung eine definierte Strecke zurückgelegt hat, wird eine zweite Beleuchtung aktiviert, beispielsweise die Beleuchtung B2, und es erfolgt eine Bildaufnahme. Dies wird für die übrigen Beleuchtungen wiederholt, im Beispiel die Beleuchtung B3 und B4. Danach beginnt die Beleuchtungsfolge wieder mit der ersten Beleuchtung usw. Im Laufe der schrittweisen oder vorzugsweisen kontinuierlichen Bewegung überstreicht ein Sichtbereich der Anordnung, welcher in die Bildebene der Kamera abgebildet wird, einen gewünschten Bereich der Bohrungsinnenfläche. Die aufgenommenen Bilder zeigen Punkte der Bohrungsinnenfläche in unterschiedlichen Helligkeitsverteilungen oder Beleuchtungssituationen, im Beispiel beleuchtet durch die Beleuchtungen B1, B2, B3 oder B4. Da die Beleuchtungen aus unterschiedlichen Raumrichtungen auf die Bohrungsinnenfläche treffen, hängt die in den Bildern registrierte Beleuchtungsstärke in der Bildebene unter anderem von der lokalen Neigung der Bohrungsinnenfläche ab. Dadurch wird es ermöglicht, die Bilder in einer Recheneinheit so auszuwerten, dass topografische Unregelmäßigkeiten der Bohrungsinnenfläche detektiert werden können. Ebenso ist es möglich, Helligkeitseigenschaften der Bohrungsinnenfläche auszuwerten. Das in Figur 1 dargestellte Ausführungsbeispiel der Vorrichtung ist insbesondere eingerichtet zum Aufnehmen der Bohrungsinnenfläche in Dunkelfeldbeleuchtung.

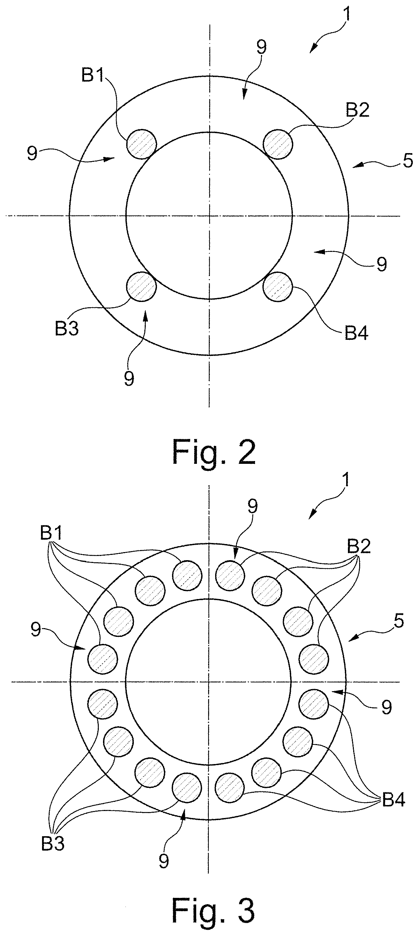

Figur 2 zeigt beispielhaft eine Beleuchtungsanordnung 5 bestehend aus vier einzelnen Beleuchtungen B1 bis B4, die entlang eines Rings angeordnet sind. Optional kann die Beleuchtungsanordnung 5 auch ein durchscheinendes streuendes Element enthalten, welches vorzugsweise in der Nähe der Beleuchtungen angebracht ist.

Alternativ oder zusätzlich können die Beleuchtungen auch gebildet werden aus Gruppen von Einzelbeleuchtungen. Figur 3 zeigt beispielhaft 4 Gruppen von Einzelbeleuchtungen, die beispielhaft wiederum aus jeweils 4 Einzelbeleuchtungen bestehen. Vorzugsweise werden als Beleuchtungselemente Halbleiterstrahlungsquellen, insbesondere LEDs verwendet.

Alternativ ist es möglich, die Bohrungsinnenfläche direkt zu beleuchten, insbesondere mit mehreren Beleuchtungselementen oder Gruppen von Beleuchtungselementen. In einer bevorzugten Ausführungsform sind die Beleuchtungselemente dabei entlang einer zylindrischen Mantelfläche angeordnet, deren Achse der Bohrungsachse entspricht oder näherungsweise entspricht. Der Durchmesser der zylindrischen Mantelfläche ist dabei kleiner gewählt als der Durchmesser der Bohrung. Vorzugsweise ist die Mantelfläche unterteilt in mehrere Segmente bezüglich des Umfangs und/oder axiale Segmente, welche unabhängig voneinander angesteuert werden können. Insbesondere ist es möglich, dass die Beleuchtungen entlang der Mantelfläche in ihrer Helligkeit örtlich strukturiert angesteuert werden können. Insbesondere ist es mit einer solchen Beleuchtungsanordnung möglich, speziell strukturierte Beleuchtungsmuster zu realisieren, insbesondere Cosinus-förmige oder Sinus-förmige Muster, oder diesen Formen angenäherte Muster, entlang des Umfangs der Beleuchtung oder Beleuchtungsmuster, die eine solche Verteilung annähern. Insbesondere sind Cosinus-förmige oder Sinus-förmige Muster mit einem Offset möglich, damit keine negativen Funktionswerte vorkommen. Alternativ oder zusätzlich kann die Beleuchtungsanordnung so angesteuert werden, dass die Beleuchtung auch in axialer Richtung strukturierte Helligkeiten realisieren kann, insbesondere einen linearen Helligkeitsverlauf oder eine Verteilung, die einen solchen Verlauf annähert.

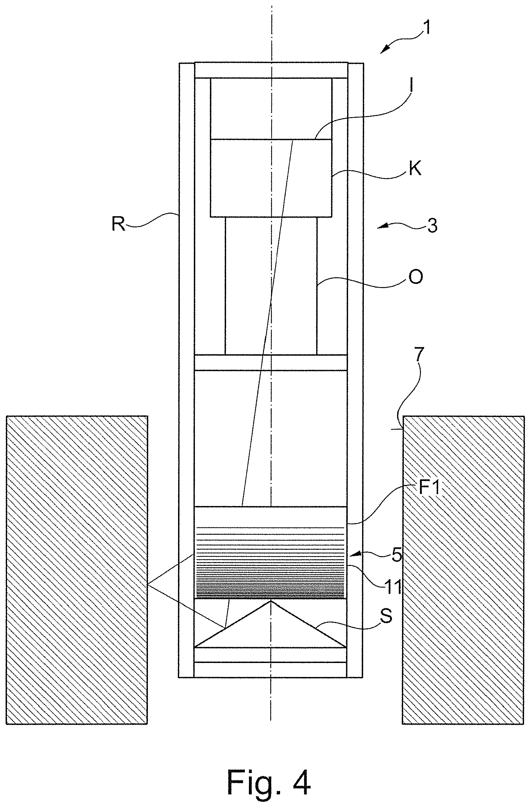

Figur 4 zeigt eine Anordnung mit direkter Beleuchtung der Bohrungsinnenfläche. Die Anordnung kann einen konischen Spiegel S enthalten. Im Beispiel weist der konische Spiegel einen Öffnungswinkel auf, welcher größer ist als 90°. Eine flächige Beleuchtungseinrichtung 11, die auch als Beleuchtung F1 bezeichnet wird, im Beispiel ist als zylindrische Mantelfläche ausgeführt und kann derart angesteuert werden, dass mehrere unterschiedliche Beleuchtungsverteilungen realisiert werden können. Vorzugsweise zeigt die Beleuchtung F1 eine lambertsche Abstrahlcharakteristik, jedoch sind auch andere Charakteristiken möglich. Vorzugsweise kann die lokale Leuchtdichte so gesteuert werden, dass sich unterschiedliche Beleuchtungsverteilungen realisieren lassen. Figur 4 zeigt beispielhaft eine Beleuchtungsverteilung, bei der die Leuchtdichte in axialer Richtung von unten nach oben linear zunimmt. Diese Beleuchtungsverteilung kann beispielsweise als erste Beleuchtungsverteilung BV1 in einer Folge von mehreren Beleuchtungsverteilungen gewählt werden. Als zweite Beleuchtungsverteilung BV2 kann beispielsweise eine Verteilung gewählt werden, welche in axialer Richtung von unten nach oben linear abnimmt. Solche Beleuchtungsverteilungen sind insbesondere dazu geeignet, Neigungen der Bohrungsinnenwand in axialer Richtung zu erfassen. Weitere Beleuchtungsverteilungen können folgen.

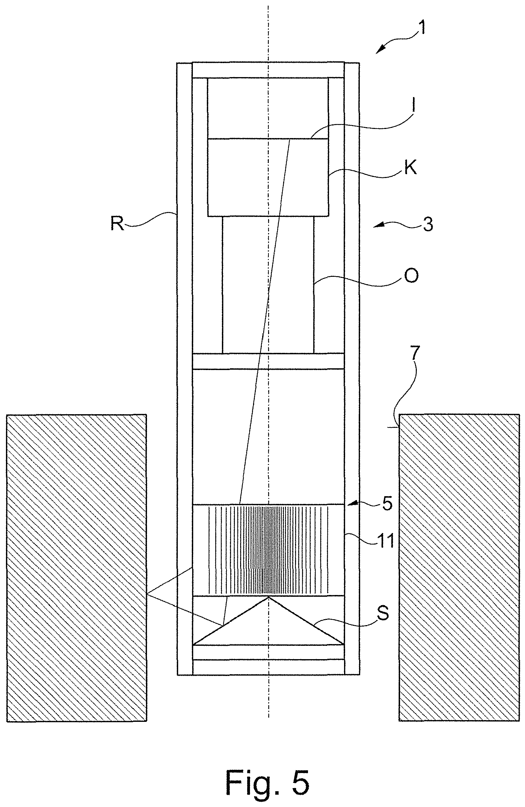

Figur 5 zeigt beispielhaft eine von mehreren weiteren möglichen Beleuchtungsverteilungen, insbesondere zusätzlich zu den in Figur 4 dargestellten Beleuchtungsverteilungen. Dabei variiert die Leuchtdichte in Umfangsrichtung. Besonders bevorzugt werden Beleuchtungsverteilungen, die Cosinus-förmig oder Sinus-förmig entlang des Umfangs variieren. Bevorzugt wird zur Cosinus- oder Sinusfunktion ein Offset derart addiert, dass sich keine negativen Funktionswerte ergeben. Bevorzugt werden dabei ein, zwei oder auch mehr Perioden der Cosinus- oder Sinus-förmigen Beleuchtungsverteilungen entlang eines Umfangswinkels von 360° verwendet. Besonders bevorzugt werden mehrere dieser Cosinus- oder Sinus-förmigen Beleuchtungsverteilungen verwendet, insbesondere derart, dass die Verteilungen durch Phasenschieben aus einer Ursprungsverteilung abgeleitet werden. Besonders bevorzugt wird eine Cosinus- oder Sinusverteilung um 0°, 90°, 180° bzw. 270° in ihrer Phase geschoben. Insbesondere kann die Beleuchtungsverteilung BV3 um 0°, BV4 um 90°, BV5 um 180° und BV6 um 270° phasengeschoben sein. Solche Beleuchtungsverteilungen sind insbesondere dazu geeignet, Neigungen der Bohrungsinnenwand in Umfangsrichtung zu erfassen.

Werden axial strukturierte und in Umfangsrichtung strukturierte Beleuchtungsverteilungen verwendet, so können sowohl Neigungen in axialer als auch in Umfangsrichtung erfasst werden. Alternativ oder zusätzlich ist es möglich, anders strukturierte Beleuchtungsverteilungen zu verwenden, beispielsweise solche mit diagonal verlaufender Struktur bezüglich der axialen und der Umfangsrichtung. Insbesondere ist es möglich, Cosinus- oder Sinus-förmige Muster zu verwenden, die gegenüber der axialen Richtung geneigt sind, besonders bevorzugt um +45° bzw. um -45°. Diese Muster können wiederum in ihrer Phase geschoben werden, bevorzugt um 0°, 90°, 180° und 270°. Besonders bevorzugt werden auch 8 Beleuchtungsverteilungen. Die Beleuchtungsverteilungen BV1 bis BV4 sind beispielsweise um +45° gegenüber der axialen Richtung geneigt und um 0°, 90°, 180° bzw. 270° gegenüber BV1 phasenverschoben. Die Beleuchtungsverteilungen BV5 bis BV8 sind dann beispielsweise um -45° gegenüber der axialen Richtung geneigt und um 0°, 90°, 180° bzw. 270° gegenüber BV5 phasenverschoben. Solche Beleuchtungsverteilungen sind geeignet, Neigungen schräg zu der axialen Richtung, insbesondere um +45° und/oder um -45° der Bohrungsinnenfläche zu erfassen. Durch Koordinatentransformation kann hieraus wiederum auf die Neigungen in axialer und in Umfangsrichtung geschlossen werden. Die in den Figuren 4 und 5 dargestellte Vorrichtung ist insbesondere eingerichtet zur Aufnahme einer Innenwandung in Hellfeldbeleuchtung.

Es zeigt sich im Übrigen insgesamt, dass mittels der hier vorgeschlagenen Vorrichtung und des Verfahrens sowohl spiegelnde als auch diffus streuende Innenwandungen erfasst werden können. Dabei wird eine Hellfeldbeleuchtung insbesondere für spiegelnde, besonders für hochspiegelnde, Innenwandungen bevorzugt, wobei eine Dunkelfeldbeleuchtung insbesondere für diffus streuende Innenwandungen bevorzugt wird.

Alternativ können auch mehrere flächige Beleuchtungseinrichtungen verwendet werden.

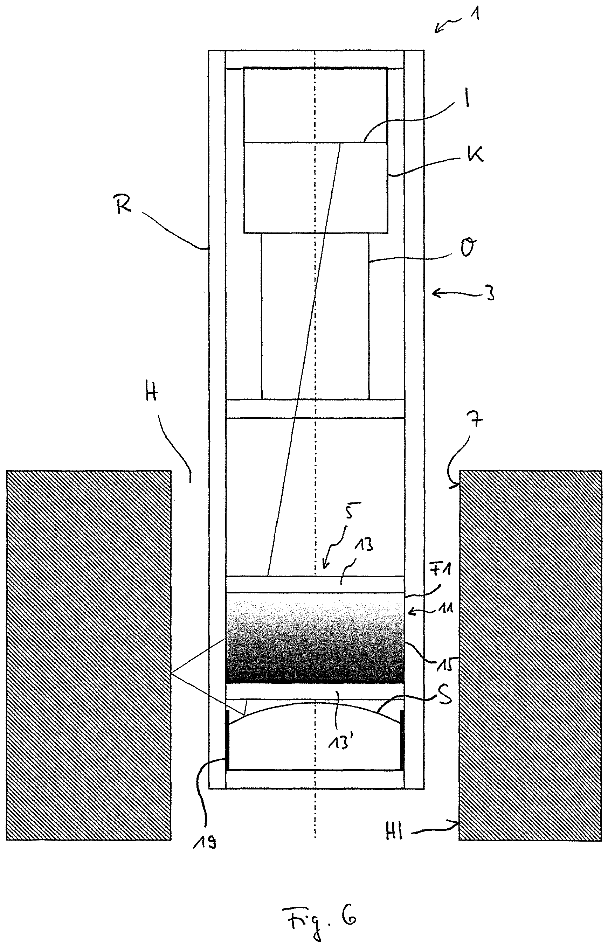

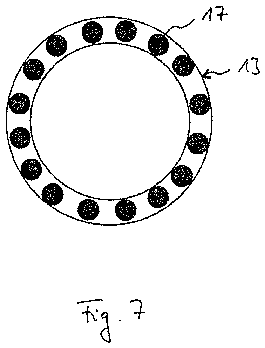

Insbesondere kann die flächige Beleuchtungseinrichtung 11 beziehungsweise die flächige Beleuchtung F1 - wie in Figur 6 dargestellt - auch so aufgebaut sein, dass sie gebildet wird aus einem oder mehreren Ringlichtern, das heißt ringförmigen Lichtquellen, und einem Streukörper. Bevorzugt werden insbesondere zwei Ringlichter 13, 13' verwendet, die an den stirnseitigen Enden eines vorzugsweise zylinderförmigen Streukörpers 15 angeordnet sind und den Streukörper 15 bevorzugt in axialer Richtung durchstrahlen. Die Ringlichter 13, 13' wiederum umfassen bevorzugt - wie in Figur 7 exemplarisch für das erste Ringlicht 13 dargestellt - mehrere Beleuchtungselemente 17, von denen der besseren Übersichtlichkeit wegen hier nur eines mit dem Bezugszeichen 17 gekennzeichnet ist, und die in ihrer Helligkeit - insbesondere unabhängig voneinander - so steuerbar sind, dass eine gewünschte Beleuchtungsverteilung der flächigen Beleuchtung F1 und insbesondere auf dem Streukörper 15 erzeugt werden kann. So kann beispielsweise bei einer Ansteuerung des ersten Ringlichts 13 und seiner Beleuchtungselemente 17 mit einer maximalen Helligkeit und des zweiten Ringlichts 13' und seiner Beleuchtungselemente mit einer minimalen Helligkeit eine axial strukturierte Beleuchtungsverteilung erzeugt werden, insbesondere auch eine stetig zu- oder abnehmende Beleuchtungsverteilung, insbesondere eine linear oder näherungsweise linear zu- oder abnehmende Beleuchtungsverteilung. Andererseits kann bei einer Ansteuerung des ersten Ringlichts 13 und seiner Beleuchtungselemente 17 mit minimaler Helligkeit und des zweiten Ringlichts 13' und seiner Beleuchtungselemente mit maximaler Helligkeit eine andere, insbesondere zur vorherigen Beleuchtungsverteilung gegenläufige Beleuchtungsverteilung erzeugt werden. Neben axial strukturierten Beleuchtungsverteilungen können aber auch in Umfangsrichtung strukturierte Beleuchtungsverteilungen dadurch realisiert werden, dass die einzelnen Beleuchtungselemente 17 des ersten Ringlichts 13 bzw. die Beleuchtungselemente des zweiten Ringlichts 13' mit entlang der Umfangsrichtung variierender Helligkeit betrieben werden. Hierdurch können in Umfangsrichtung strukturierte Beleuchtungsverteilungen erzeugt werden, insbesondere auch solche mit cosinus- bzw. sinus-förmigem Verlauf oder einer Annäherung an einen solchen Verlauf. Insbesondere können auch Beleuchtungsverteilungen erzeugt werden, die in axialer Richtung und/oder in Umfangsrichtung strukturiert sind. Insbesondere ist es vorteilhaft, wenn die Helligkeiten der Beleuchtungselemente 17 des ersten Ringlichts 13 und der Beleuchtungselemente des zweiten Ringlichts 13' individuell angesteuert werden können. Ebenso kann eine kleinere oder eine Größere Anzahl von Ringlichtern 13, 13' verwendet werden.

Die Figuren 6 und 7 zeigen eine solche Anordnung. Gleiche und funktionsgleiche Elemente sind mit gleichen Bezugszeichen versehen, sodass insofern auf die vorangegangene Beschreibung verwiesen wird. Die Bildebene von Figur 7 steht dabei senkrecht auf der Bildebene von Figur 6, insbesondere geht der Blick des Betrachters in Figur 7 in axialer Richtung auf eine dem Streukörper 15 zugewandte Stirnseite des ersten Ringlichts 13. Vorzugsweise wird bei einer solchen Anordnung ein Spiegel S, insbesondere ein konischer Spiegel, ein sphärischer Spiegel, ein Parabolspiegel, ein Ellipsoidspiegel, ein rotationssymmetrischer Spiegel oder ein Freiformspiegel verwendet. Insbesondere kann es sich dabei um einen konvexen Spiegel handeln. Besonders bevorzugt wird ein sphärischer konvexer Spiegel. Vorzugsweise und insbesondere arbeitet eine solche Vorrichtung 1 ausschließlich im Hellfeld. Bevorzugt existiert bei dieser Vorrichtung 1 kein mit Dunkelfeld-Bedingungen beleuchteter Bereich. Alternativ können eine oder mehrere Abschattungen 19 vorgesehen werden, welche einen möglichen Bereich eines Dunkelfelds ausblenden. Bevorzugt kann der optische und mechanische Aufbau so ausgeführt sein, dass ein möglicher Bereich des Dunkelfelds bereits baulich und/oder optisch bedingt eliminiert wird.

Alternativ oder zusätzlich kann eine Anzahl von Beleuchtungselementen, insbesondere eng benachbarte Beleuchtungselemente, an oder nahe der Oberfläche der flächigen Beleuchtung F1 angeordnet sein, welche vorzugsweise individuell in ihrer Helligkeit angesteuert werden können. Vorzugsweise kann zusätzlich ein Streukörper verwendet werden, welcher eventuelle Ungleichmäßigkeiten am Übergang zwischen den einzelnen Lichtquellen ausgleicht.

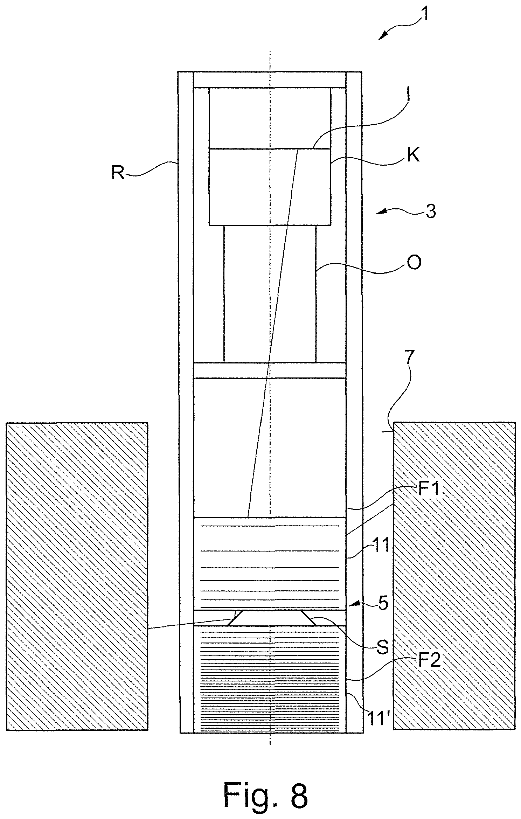

Figur 8 zeigt eine Vorrichtung, die zwei flächige Beleuchtungseinrichtungen 11, 11', die auch als Beleuchtungen F1 und F2 bezeichnet werden, umfasst. Dies ermöglicht es, den Sichtbereich auf die Bohrungsinnenwand zwischen den beiden flächigen Beleuchtungseinrichtungen 11, 11' zu platzieren. Der Öffnungswinkel des Kegels kann hier beispielsweise 90° betragen. Vorzugsweise erstrecken sich die Beleuchtungsverteilungen über beide flächige Beleuchtungen. Beispielsweise kann eine lineare Beleuchtungsverteilung in axialer Richtung auf einer der flächigen Beleuchtungen beginnen und auf der zweiten flächigen Beleuchtung fortgesetzt werden. Eine Beleuchtungsverteilung in Umfangsrichtung erstreckt sich vorzugsweise ebenfalls über beide flächige Beleuchtungen, so dass die Beleuchtungsverteilung auf der einen flächigen Beleuchtung auf der zweiten flächigen Beleuchtung fortgesetzt wird. Alternativ sind auch mehr als zwei flächige Beleuchtungen möglich. Alternativ oder zusätzlich sind andere Beleuchtungsverteilungen möglich, insbesondere auch diagonal verlaufende. Das in Figur 8 dargestellte Ausführungsbeispiel der Vorrichtung ist insbesondere eingerichtet zur Aufnahme einer Innenwandung in Hellfeldbeleuchtung. Es ist möglich, dass bei der hier gewählten Beleuchtungsanordnung auch axiale Bereiche existieren, in denen eine Dunkelfeldbeleuchtung verwirklicht wird. Es wird aber bevorzugt nur eine Beleuchtungsart tatsächlich für die Aufnahmen der Innenwandung genutzt. Insbesondere wird bevorzugt durch geeignet ausgebildete und angeordnete Abschirmelemente dafür gesorgt, dass die von der Kamera aufgenommenen Bereiche der Innenwandung mit definierten Beleuchtungsbedingungen, insbesondere entweder nur mit Hellfeldbeleuchtung oder nur unter Dunkelfeldbeleuchtungsbedingungen aufgenommen werden. Somit können eindeutige Beleuchtungsbedingungen für die Innenwandung geschaffen werden, was die Auswertung der Aufnahmen erleichtert.

## Patentansprüche

1. Vorrichtung (1) zur optischen Erfassung von Innenwandungen (7), mit
- wenigstens einer Kamera (K),
- einer optischen Abbildungsanordnung (3), und
- einer Beleuchtungsanordnung (5), wobei
- die Vorrichtung (1) eingerichtet ist, um eine Mehrzahl axial zueinander versetzter Bereiche einer Innenwandung (7) in Rundumsicht mit der Kamera (K) aufzunehmen, und wobei
- die Vorrichtung (1) eingerichtet ist, um in jedem aufgenommenen Einzelbild einen axialen Ausschnitt der Innenwandung (7) entlang einer geschlossenen Umfangslinie aufzunehmen,
**dadurch gekennzeichnet, dass**
- die Beleuchtungsanordnung (5) wenigstens zwei verschiedene Funktionszustände aufweist, wobei einem ersten Funktionszustand eine erste von der Beleuchtungsanordnung (5) emittierte Helligkeitsverteilung zugeordnet ist, die sich von einer zweiten Helligkeitsverteilung, die in wenigstens einem zweiten Funktionszustand von der Beleuchtungsanordnung (5) emittiert wird, unterscheidet, wobei
- die Beleuchtungsanordnung (5) eingerichtet ist, um axial, radial und/oder in Umfangsrichtung gesehen variierende Helligkeitsverteilungen zu emittieren, so dass
- die Innenwandung (7) in den verschiedenen Funktionszuständen der Beleuchtungsanordnung (5) aus verschiedenen Raumrichtungen beleuchtet wird, wobei
- die Vorrichtung (1) dazu eingerichtet ist, einen Wechsel der Helligkeitsverteilungen mit einer Frequenz von mindestens 25 Hz durchzuführen.

2. Vorrichtung (1) nach Anspruch 1, **dadurch gekennzeichnet, dass** die Beleuchtungsanordnung (5) wenigstens drei, vorzugsweise wenigstens vier verschiedene Funktionszustände aufweist, wobei jedem Funktionszustand eine von den Helligkeitsverteilungen der anderen Funktionszustände verschiedene Helligkeitsverteilung zugeordnet ist.

3. Vorrichtung (1) nach einem der vorhergehenden Ansprüche, **dadurch gekennzeichnet, dass** die wenigstens eine Kamera (K), die optische Abbildungsanordnung (3) und die Beleuchtungsanordnung (5) integral miteinander verlagerbar ausgebildet sind.

4. Vorrichtung (1) nach einem der vorhergehenden Ansprüche, **dadurch gekennzeichnet, dass** die wenigstens eine Kamera (K), die optische Abbildungsanordnung (3) und die Beleuchtungsanordnung (5) integral miteinander, insbesondere miteinander zusammenhängend, ausgebildet sind.

5. Vorrichtung (1) nach einem der vorhergehenden Ansprüche, **dadurch gekennzeichnet, dass** die optische Abbildungsanordnung (3) eine Kameraoptik (O) und/oder eine Spiegelanordnung (S) aufweist.

6. Vorrichtung (1) nach einem der vorhergehenden Ansprüche, **dadurch gekennzeichnet, dass** die Beleuchtungsanordnung (5) eingerichtet und/oder angeordnet ist zur direkten Beleuchtung einer Innenwandung (7), und/oder dass die Beleuchtungsanordnung (5) eingerichtet und/oder angeordnet ist zur indirekten Beleuchtung einer Innenwandung (7), insbesondere über die Abbildungsanordnung (3).

7. Vorrichtung (1) nach einem der vorhergehenden Ansprüche, **dadurch gekennzeichnet, dass** die Beleuchtungsanordnung (5) wenigstens zwei unabhängig voneinander schaltbare Lichtquellen (9) und/oder wenigstens eine flächige Beleuchtungseinrichtung (11,11') aufweist, wobei die flächige Beleuchtungseinrichtung (11,11') eingerichtet ist, um in einem ersten Funktionszustand ein erstes, strukturiertes Beleuchtungsmuster und in einem zweiten Funktionszustand ein zweites strukturiertes Beleuchtungsmuster, das von dem ersten Beleuchtungsmuster verschieden ist, darzustellen.

8. Vorrichtung (1) nach einem der vorhergehenden Ansprüche, **dadurch gekennzeichnet, dass** die Beleuchtungsanordnung (5) wenigstens zwei flächige Beleuchtungseinrichtungen (11,11') aufweist, die axial voneinander beabstandet angeordnet sind, wobei die Abbildungsanordnung (3) so eingerichtet und relativ zu den Beleuchtungseinrichtungen (11,11') positioniert ist, dass ein Bereich einer Innenwandung (7) axial zwischen den flächigen Beleuchtungseinrichtungen (11,11') in der Kamera (K) abbildbar ist.

9. Vorrichtung (1) nach einem der vorhergehenden Ansprüche, **dadurch gekennzeichnet, dass** die Beleuchtungsanordnung (5) wenigstens zwei axial voneinander beabstandete, ringförmige Lichtquellen (9) aufweist, die unabhängig voneinander schaltbar sind.

10. Verfahren zur optischen Erfassung von Innenwandungen, mit einer Vorrichtung (1) nach einem der Ansprüche 1 bis 9, wobei
- zeitlich nacheinander eine Bildfolge von axial zueinander versetzten Bereichen in Rundumsicht einer Innenwandung (7) mit der Kamera (K) aufgenommen wird, wobei zugleich
- die Beleuchtungsanordnung (5) angesteuert wird, um während der Aufnahme der Bildfolge wechselnde Helligkeitsverteilungen zu emittieren, und wobei
- ein Wechsel der Helligkeitsverteilungen mit einer Frequenz von mindestens 25 Hz durchgeführt wird.

11. Verfahren nach Anspruch 10, **dadurch gekennzeichnet, dass** die Vorrichtung (1) zumindest teilweise, vorzugsweise insgesamt, in axialer Richtung schrittweise oder kontinuierlich verlagert wird.

12. Verfahren nach einem der Ansprüche 10 oder 11, **dadurch gekennzeichnet, dass** ein Wechsel der Helligkeitsverteilungen mit einer Frequenz von mindestens 50 Hz, vorzugsweise von mindestens 75 Hz, vorzugsweise von mindestens 100 Hz, durchgeführt wird.

13. Verfahren nach einem der Ansprüche 10 bis 12, **dadurch gekennzeichnet, dass**
- eine zyklische Abfolge einer vorbestimmte Zahl von Helligkeitsverteilungen erzeugt wird, wobei
- für jede Helligkeitsverteilung ein ringförmiger Bereich eines Sensors der Kamera (K) mit einer radialen Breite, gemessen als Anzahl von Pixeln des Sensors, ausgewertet wird, wobei die Anzahl von Pixeln gleich der vorbestimmten Zahl der Helligkeitsverteilung oder gleich einem ganzzahligen Vielfachen hiervon ist, wobei
- ein axialer Versatz eines mit einer nächsten Helligkeitsverteilung aufgenommenen Bereichs der Innenwandung (7) zu einem vorherigen, mit einer unmittelbar vorhergehenden Helligkeitsverteilung aufgenommenen Bereich gleich einer axialen Höhe gewählt wird, die sich aus der die Breite des ringförmigen Bereichs angebenden Anzahl von Pixeln dividiert durch die vorbestimmte Zahl der Helligkeitsverteilungen und multipliziert mit einer optischen Pixelhöhe des Sensors auf der Innenwandung (7) ergibt.

14. Verfahren nach einem der Ansprüche 10 bis 13, **dadurch gekennzeichnet, dass** eine zyklische Abfolge einer vorbestimmten Zahl von Helligkeitsverteilungen erzeugt wird, wobei wenigstens fünf Zyklen, vorzugsweise wenigstens 20 Zyklen, vorzugsweise wenigstens 100 Zyklen, vorzugsweise wenigstens 500 Zyklen, durchlaufen werden.

## Claims

1. An apparatus (1) for optical detection of interior walls (7), comprising
- at least one camera (K),
- an optical imaging arrangement (3) and
- a lighting arrangement (5), wherein
- the apparatus (1) is equipped to record images of a plurality of areas of an interior wall (7) offset axially from one another in a panoramic view using the camera (K), and wherein
- the apparatus (1) is equipped to record an axial section of the interior wall along a closed circumferential line in each individual image recorded,
**characterized in that**
- the lighting arrangement (5) has at least two different functional states, wherein a first brightness distribution emitted by the lighting arrangement (5) is assigned to a first functional state, this brightness distribution differing from a second brightness distribution emitted by the lighting arrangement (5) in at least one second functional state, wherein
- the lighting arrangement (5) is equipped to emit brightness distributions that vary axially, radially and/or in the circumferential direction, so that
- the interior wall (7) is illuminated from various directions in space by the lighting arrangement (5), wherein
- the apparatus (1) is equipped to change to brightness distribution with a frequency of at least 25 Hz.

2. The apparatus (1) according to claim 1, **characterized in that** the lighting arrangement (5) has three, preferably at least four different functional states, wherein a brightness distribution different from the brightness distributions of the other functional states is assigned to each functional state.

3. The apparatus (1) according to any one of the preceding claims, **characterized in that** the at least one camera (K), the optical imaging arrangement (3) and the lighting arrangement (5) are configured to be integrally displaceable together.

4. The apparatus (1) according to any one of the preceding claims, **characterized in that** the at least one camera (K), the optical imaging arrangement (3) and the lighting arrangement (5) are configured to be integral with one another, in particular cohesive with one another.

5. The apparatus (1) according to any one of the preceding claims, **characterized in that** the optical imaging arrangement (3) has a camera lens (O) and/or a mirror array (S).

6. The apparatus (1) according to any one of the preceding claims, **characterized in that** the lighting arrangement (5) is equipped and/or arranged for direct lighting of an interior wall (7) and/or the lighting arrangement (5) is equipped and/or arranged for indirect lighting of an interior wall (7) in particular by means of the imaging arrangement (3).

7. The apparatus (1) according to any one of the preceding claims, **characterized in that** the lighting arrangement (5) has at least two light sources (9) switchable independently of one another and/or at least one planar light (11, 11'), wherein the planar light (11, 11') is equipped to display a first structured lighting pattern in a first functional state and a second structured lighting pattern in a second functional state, which is different from the first lighting pattern.

8. The apparatus (1) according to any one of the preceding claims, **characterized in that** the lighting arrangement (5) has at least two planar lights (11, 11'), which are arranged with an axial distance between them, wherein the imaging arrangement (3) is equipped and is positioned relative to the lights (11, 11'), so that an area of an interior wall (7) can be imaged axially between the planar lights (11, 11') in the camera (K).

9. The apparatus (1) according to any one of the preceding claims, **characterized in that** the lighting arrangement (5) has at least two ring-shaped light sources (9) spaced a distance apart from one another axially, switchable independently of one another.

10. A method for optical detection of interior walls, having an apparatus (1) according to any one of claims 1 to 9, wherein
- a chronological image sequence of areas offset axially from one another is recorded with a camera (K) in a panoramic view of an interior wall (7), wherein at the same time,
- the lighting arrangement (5) is controlled to emit brightness distributions that change during the recording of the image sequence, and wherein
- a change in the brightness distributions is implemented with a frequency of at least 25 Hz.

11. The method according to claim 10, **characterized in that** the apparatus (1) is displaced incrementally or continuously at least partially, preferably as a whole in the axial direction.

12. The method according to any one of claims 10 or 11, **characterized in that** a change in the brightness distributions is implemented with a frequency of at least 50 Hz, preferably at least 75 Hz, preferably at least 100 Hz.

13. The method according to any one of claims 11 to 13, **characterized in that**
- a cyclic sequence of a predetermined number of brightness distributions is created, wherein
- for each brightness distribution a ring-shaped area of a sensor of the camera (K) with a radial width measured as the number of pixels of the sensor is evaluated, wherein the number of pixels is equal to the predetermined number of brightness distribution or equal to an integral multiple thereof wherein
- an axial offset of a region of the interior wall (7) recorded with the next brightness distribution relative to a previous brightness distribution immediately preceding the current one is selected to be equal to the axial height resulting from the number of pixels indicated by the width of the ring-shaped area divided by the predetermined number of brightness distributions and multiplied times an optical pixel height of the sensor on the interior wall (7).

14. The method according to any one of claims 10 to 13, **characterized in that** a cyclical sequence of a predetermined number of brightness distributions is generated, wherein running through at least five cycles, preferably at least 20 cycles, preferably at least 100 cycles, preferably at least 500 cycles.

## Revendications

1. Dispositif (1) de détection optique de parois intérieures (7), comportant
- au moins une caméra (K),
- un agencement de visualisation optique (3), et
- un agencement d'éclairage (5),
- le dispositif (1) étant conçu de manière à pouvoir réaliser, au moyen de la caméra (K) fonctionnant en mode panoramique, une pluralité de prises de vue de zones axialement décalées les unes par rapport aux autres d'une paroi intérieure (7), et
- le dispositif (1) étant conçu de manière à pouvoir réaliser, dans chacune des images prises en suivant une ligne circonférentielle fermée, une prise de vue d'une section axiale de la paroi intérieure (7),
**caractérisé en ce que**
- l'agencement d'éclairage (5) présente au moins deux états de fonctionnement différents, un premier état de fonctionnement étant associé à une première distribution de luminosité émise par l'agencement d'éclairage (5), cette dernière étant différente d'une deuxième distribution de luminosité laquelle est émise par l'agencement d'éclairage (5) dans au moins un deuxième état de fonctionnement,
- l'agencement d'éclairage (5) étant conçu de manière à pouvoir émettre des distributions de luminosité qui varient axialement, radialement et/ou selon la direction circonférentielle, faisant en sorte que
- la paroi intérieure (7) soit éclairée, dans les différents états de fonctionnement de l'agencement d'éclairage (5), depuis différentes directions dans l'espace,
- le dispositif (1) étant conçu de manière à pouvoir changer les distributions de luminosité avec une fréquence d'au moins 25 Hz.

2. Dispositif (1) selon la revendication 1, **caractérisé en ce que** l'agencement d'éclairage (5) présente au moins trois, de préférence au moins quatre états de fonctionnement différents, chacun desdits états de fonctionnement étant associé à une distribution de luminosité qui est différente des distributions de luminosité des autres états de fonctionnement.

3. Dispositif (1) selon l'une des revendications précédentes, **caractérisé en ce que** l'au moins une caméra (K), l'agencement de visualisation optique (3) et l'agencement d'éclairage (5) sont réalisés de manière à pouvoir être déplacés de manière intégrale les uns avec les autres.

4. Dispositif (1) selon l'une des revendications précédentes, **caractérisé en ce que** l'au moins une caméra (K), l'agencement de visualisation optique (3) et l'agencement d'éclairage (5) sont réalisés de manière intégrale les uns avec les autres, notamment en étant reliés les uns aux autres.

5. Dispositif (1) selon l'une des revendications précédentes, **caractérisé en ce que** l'agencement de visualisation optique (3) comporte un objectif de caméra (O) et/ou un agencement de miroirs (S).

6. Dispositif (1) selon l'une des revendications précédentes, **caractérisé en ce que** l'agencement d'éclairage (5) est conçu et/ou disposé de manière à pouvoir directement éclairer une paroi intérieure (7), et/ou que l'agencement d'éclairage (5) est conçu et/ou disposé de manière à pouvoir éclairer la paroi intérieure (7) indirectement, notamment par l'intermédiaire du l'agencement de visualisation (3).

7. Dispositif (1) selon l'une des revendications précédentes, **caractérisé en ce que** l'agencement d'éclairage (5) comporte au moins deux sources de lumière (9) pouvant être réglées indépendamment l'une de l'autre et/ou au moins un organe d'éclairage (11, 11') plan, l'organe d'éclairage (11, 11') plan étant conçu de manière à pouvoir représenter, dans un premier état de fonctionnement, un premier schéma d'éclairage structuré et, dans un deuxième état de fonctionnement, un deuxième schéma d'éclairage structuré qui est différent du premier schéma d'éclairage.

8. Dispositif (1) selon l'une des revendications précédentes, **caractérisé en ce que** l'agencement d'éclairage (5) comporte au moins deux organes d'éclairage (11, 11') plans qui sont disposés de manière à être distancés axialement l'un de l'autre, le de l'agencement de visualisation (3) étant conçu et positionné par rapport aux organes d'éclairage (11, 11') de manière à ce qu'une image représentant une zone de la paroi intérieure (7) puisse être visualisée au sein de la caméra (K), axialement entre les organes d'éclairage (11, 11') plans.

9. Dispositif (1) selon l'une des revendications précédentes, **caractérisé en ce que** l'agencement d'éclairage (5) comporte au moins deux sources de lumière (9) annulaires qui sont axialement distancées l'une de l'autre et qui peuvent être commutées indépendamment l'une de l'autre.

10. Procédé de détection optique de parois intérieures, au moyen d'un dispositif (1) selon l'une des revendications 1 à 9,
- la caméra (K) étant mise en œuvre en mode panoramique, en réalisant des prises de vue les unes après les autres, pour ainsi obtenir une série d'images de zones axialement décalées d'une paroi intérieure (7), alors que
- l'agencement d'éclairage (5) est commandé de manière à ce qu'il émette, pendant la prise de vue permettant d'obtenir la série d'images, des différentes distributions de luminosité, et
- les changements des distributions de luminosité sont effectués avec une fréquence d'au moins 25 Hz.

11. Procédé selon la revendication 10, **caractérisé en ce que** le dispositif (1) est déplacé par étapes ou de manière continue, au moins en partie et de préférence dans son intégralité, selon la direction axiale.

12. Procédé selon l'une des revendications 10 ou 11, **caractérisé en ce que** les changements des distributions de luminosité sont effectués avec une fréquence d'au moins 50 Hz, préférentiellement d'au moins 75 Hz, préférentiellement d'au moins 100 Hz.

13. Procédé selon l'une des revendications 10 à 12, **caractérisé en ce que**
- l'on réalise une séquence cyclique d'un nombre prédéfini de distributions de luminosité,
- une zone annulaire d'un capteur de la caméra (K) ayant une largeur radiale, mesurée en tant que nombre de pixels dudit capteur, est évaluée pour chaque distribution de luminosité, le nombre de pixels étant égal au nombre prédéfini de la distribution de luminosité ou égal à ce dernier multiplié par un nombre entier,
- un décalage axial tel qu'une zone de la paroi intérieure (7) sujette à la prise de vue moyennant une prochaine distribution de luminosité le présente par rapport à la précédente zone dont la prise de vue a été réalisée moyennant la distribution de luminosité directement précédente, est choisi de manière à ce qu'il soit égal à une hauteur axiale que l'on obtient en divisant le nombre de pixels indiquant la largeur de la zone annulaire par le nombre prédéfini des distributions de luminosité et en le multipliant par une hauteur optique de pixel que le capteur présente sur la paroi intérieure (7).

14. Procédé selon l'une des revendications 10 à 13, **caractérisé en ce que** l'on génère une séquence cyclique d'un nombre prédéfini de distributions de luminosité, de manière à parcourir au moins cinq cycles, de préférence au moins 20 cycles, de préférence au moins 100 cycles, de préférence au moins 500 cycles.
